# EUROPÄISCHE PATENTANMELDUNG

(11) **EP 0 546 438 A1**
(43) Veröffentlichungstag der Anmeldung: **16.06.1993**
(21) Anmeldenummer: 92120568.8
(22) Anmeldetag: 02.12.1992
(51) Int. Cl.: B65D 85/64, B65D 65/12, B65D 59/00, B65D 81/02

(54) **Verpackung für einen Gegenstand**

(30) Priorität: 03.12.1991 DE 4139856; 26.10.1992 DE 4236127
(71) Anmelder: DEUTER SPORT UND LEDER GMBH, D-86156 Augsburg (DE)
(72) Erfinder: Franke, Michael, W-8000 München 40 (DE)
(74) Vertreter: von Puttkamer, Nikolaus, Dipl.-Ing. Patentanwälte Haft, von Puttkamer Berngruber, Czybulka

(57) **Zusammenfassung**

Die Erfindung betrifft eine Verpackung für einen Gegenstand (4), wobei die Verpackung den Gegenstand (4) im verpackten Zustand an einer ersten Fläche und den daran angrenzenden weiteren Flächen schützend umgibt. Die Verpackung weist die Form einer zu einer Seite hin offenen, flexiblen Schutzhülle (1) auf, die über den Gegenstand (4) stülpbar ist. In Kanten- und/oder Eckbereichen ist die Schutzhülle (1) mit stoßdämpfenden Einrichtungen (3) einer vorgegebenen Festigkeit vorsehen, so daß diese Einrichtungen bei der Anbringung der Schutzhülle (1) am Gegenstand (4) eine Führungs-und/oder Justierfunktion erfüllen.

## Beschreibung

Die Erfindung betrifft eine Verpackung für Gegenstände, insbesondere Möbelstücke, Elektrogeräte und dergleichen nach dem Oberbegriff des Patentanspruches 1.

Üblicherweise werden insbesondere in der Möbelindustrie Möbelstücke und in der Elektroindustrie Elektrogeräte zum Versand bzw. zur Auslieferung mit Verpackungen versehen, die die Möbelstücke bzw. Elektrogeräte vorzugsweise wenigstens von zwei Seiten umgebende Styroporteile und Kartons umfassen, in die die Möbelstücke bzw. Elektrogeräte zusammen mit den styroporteilen eingesetzt sind. Ein Problem derartiger Verpakkungen besteht darin, daß sie insbesondere wegen der Styroporteile wenig umweltfreundlich sind. Nach dem Kauf bzw. der Auslieferung der Möbelstücke bzw. Elektrogeräte bleiben diese bekannten Verpackungen üblicherweise beim Käufer zurück, so daß er selbst für die Entsorgung der sperrigen Verpackungen sorgen muß.

Die Aufgabe der vorliegenden Erfindung besteht daher darin, eine Verpackung für Möbelstükke, Elektrogeräte und dergleichen zu schaffen, die wiederverwendbar, umweltfreundlich und im wesentlichen recyclingfähig ist.

Diese Aufgabe wird durch eine Verpackung der eingangs genannten Art gelöst, die durch die in dem kennzeichnenden Teil des Patentanspruches 1 angegebenen Merkmale gekennzeichnet ist.

Der wesentliche Vorteil der Erfindung besteht darin, daß die vorliegende Verpackung keine sperrigen, nicht recyclingfähigen Teile, wie beispielsweise Styroporteile und Pappkartons aufweist. Vorteilhafterweise ist die vorliegende Verpackung sehr häufig, beispielsweise bis zu einhundertmal, verwendbar, so daß mit ihr viele, beispielsweise bis zu einhundert Möbelstücke bzw. Elektrogeräte verpackt werden können, ohne daß hierfür neue Verpackungsmaterialien erforderlich sind. Da die Verpackung im wesentlichen aus recyclingfähigen Materialien, beispielsweise aus Baumwolle, Jute, Leinen und anderen verrottbaren Materialien besteht, wird die Umwelt so gut wie nicht belastet. Nach der Ausmusterung der vorliegenden Verpackungen können ihre Bestandteile auch dadurch wieder verwendet werden, daß die aus den zuvor genannten Materialien bestehenden Gewebe in der Form von Füllmaterialien, Putzwolle oder Putzlappen einer Wiederverwendung zugeführt werden. Ein weiterer wesentlicher Vorteil der vorliegenden Verpackungen besteht darin, daß sie so flexibel sind, daß sie zusammengefaltet werden können, so daß sie sowohl vor als auch nach ihrem Einsatz auf engstem Raum stapelbar sind. Große Lagerräume sind daher nicht erforderlich. Vorteilhafterweise weisen die vorliegenden Verpackungen an ihren Kantenbereichen, die beim bestimmungsgemäßen Gebrauch an den Kanten von Möbelstücken oder Elektrogeräten oder dergleichen anliegen, einen Kantenschutz auf, der eine Art Polsterwirkung hat und gleichzeitig beim Anbringen der Verpackung an einem Möbelstück oder dergleichen die Funktion einer Führung erfüllt, so daß die Verpackung in einer einfachen Weise von oben oder von einer Seite her auf das Möbelstück aufschiebbar ist, ohne daß hierfür besondere Maßnahmen erforderlich sind. Aus diesem zuvor genannten Grunde sind die vorliegenden Verpackungen auch dazu geeignet, durch spezielle Maschinen automatisch an den Geräten bzw. Möbelstücken angebracht zu werden.

Bei einer besonders bevorzugten Ausgestaltung der Erfindung weisen die vorliegenden Verpackungen flexible Bereiche auf, so daß sie an Gegenstände mit unterschiedlichen Größen anpaßbar sind. Dies hat den Vorteil, daß ein und dieselben Verpackungen für Gegenstände unterschiedlicher Größen verwendbar sind. Es müssen daher nicht Verpackungen in unterschiedlichen Größen hergestellt werden.

Weitere vorteilhafte Ausgestaltungen der Erfindung gehen aus den Unteransprüchen hervor.

Im folgenden werden die Erfindung und deren Ausgestaltungen im Zusammenhang mit den Figuren näher erläutert. Es zeigen:
Fig. 1 in schematischer Darstellung eine erfindungsgemäße Verpakkung und
Fig. 2 bis 20 Weiterbildungen der Erfindung.

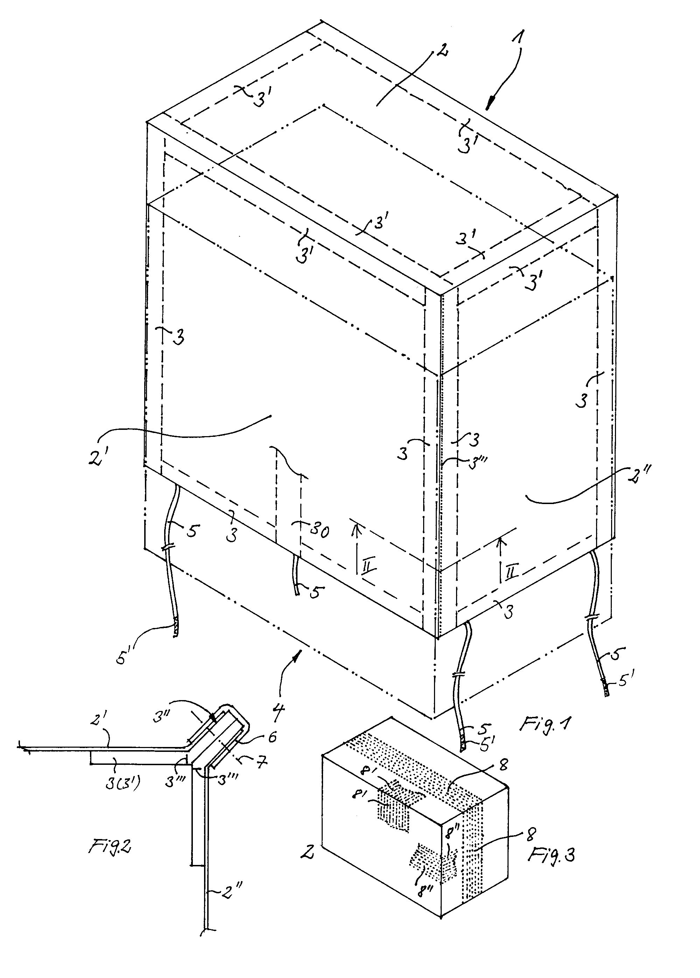

Gemäß Figur 1 weist eine Ausführungsform der vorliegenden Verpackung die Form einer an die Gestalt des zu verpackenden Gegenstandes 4, bei dem es sich beispielsweise um ein Möbelstück, wie ein Schrank, ein Regal, ein Element eines Küchenblockes oder dergleichen, oder ein Elektrogerät, wie ein Fernsehapparat, ein Elektroherd oder dergleichen handelt, angepassten Schutzhülle 1 auf. Im dargestellten Fall weist der Gegenstand die Form eines rechteckigen Quaders auf. Dementsprechend weist die Schutzhülle 1 vier Seitenteile 2', 2" und ein oberes Teil 2 auf. Die Seitenteile 2', 2" sind an den einander zugewandten Seitenkanten miteinander verbunden. Die oberen Kanten der Seitenteile 2', 2" sind mit den Kanten des oberen Teiles 2 verbunden. Auf diese Weise ergibt sich die unten offene Schutzhülle 1, die ebenfalls die Form eines rechteckigen Quaders aufweist. Die Seitenteile 2', 2" und das obere Teil 2 bestehen aus einem umweltfreundlichen, recyclingfähigen Material, vorzugsweise aus Baumwolle, Jute, Leinen oder einem anderen Material, das anders als Styropor oder ein sonstiges Kunststoffmaterial verrottbar ist. Zudem können nach der Ausmusterung die aus den genannten Materialien bestehenden Seitenteile 2', 2" und das obere Teil 2 einer Wiederverwendung, beispielsweise als Füllmaterial, Putzwolle oder Putzlappen, zugeführt werden. Vorzugsweise sind die Seitenteile 2', 2" und das obere Teil 2 an den zuvor genannten Kanten aneinander vernäht.

Ein wesentliches Merkmal der vorliegenden Verpackung besteht darin, daß die Schutzhülle 1 an allen vier vertikalen Eckkanten eine als Kantenschutz für den Gegenstand 4 dienende stoßdämpfende Einlage 3 aufweist, die vorzugsweise die Form eines im montierten Zustand der Schutzhülle 1 die Eckkanten des Gegenstandes 4 umgebenden Winkelteiles aufweist, das aus einem stoßdämpfenden, elastischen Material besteht. Als Materialien für die stoßdämpfende Einlage 3 eignet sich insbesondere Filz. Da die vorzugsweise aus Filz bestehenden, winkelförmigen stoßdämpfenden Einlagen 3, innen an den Eckbereichen der Schutzhülle 1 befestigt sind, verleihen sie dieser eine gewisse Steifigkeit. Die stoßdämpfende Einlage 3 erfüllt daher neben der stoßdämpfenden Funktion noch eine weitere wesentliche Funktion. Die winkelförmigen Einlagen 3 wirken nämlich beim Anbringen der Schutzhülle 1 am Gegenstand 4 als eine Art "Führungsschiene", da sie die Schutzhülle 1 aussteifen. Auf diese Weise kann die Schutzhülle 1 ganz einfach von oben oder einer Seite auf den Gegenstand 4 aufgeschoben werden, ohne daß die Gefahr besteht, daß sich das bei der Aufschiebeoperation oberhalb des Gegenstandes 4 noch befindliche Ende der schutzhülle 1 in einer die Aufschiebeoperation störenden Weise verdreht bzw. abbiegt, was ohne die Vorsehung der stoßdämpfenden Einlagen 3 wegen der Flexibilität des Materials der Seitenteile 2', 2" und des oberen Teiles 2 leicht möglich wäre. Diese Ausführungsform eignet sich daher besonders gut, von Automaten an den Gegenständen 4 angebracht zu werden, die bevorzugt mit vier Greifarmen oder dergleichen an den unteren Endbereichen der Einlagen 3 angreifen und die Verpackung über den Gegenstand 4 ziehen.

Vorzugsweise sind die oberen Enden der winkelförmigen Einlagen 3 im Bereich zweier sich gegenüberliegender Kanten des oberen Teiles 2 oder im Bereich aller vier Kanten des oberen Teiles 2 durch weitere winkelförmige, stoßdämpfende Einlagen 3' miteinander verbunden. Auf diese Weise werden auch die oberen Kanten des Gegenstandes 4 geschützt und wird bei der Montage der Schutzhülle 1 das obere Teil 2 automatisch in seine richtige, die obere Fläche des Gegenstandes 4 überdeckende Lage gebracht.

Es ist auch denkbar im Bereich der Öffnungsränder derartige stoßdämpfende Einrichtungen vorzusehen. An der Stelle der winkelförmigen Einlagen können dort auch an den Randbereichen befestigte streifenförmige Einlagen vorgesehen sein.

An wenigstens zwei sich gegenüberliegenden unteren Kanten der Seitenteile 2' bzw. 2" können Einrichtungen zum Befestigen der Schutzhülle 1 am Gegenstand 4 vorgesehen sein. Diese Einrichtungen weisen zweckmäßigerweise die Form von aus Hanf oder Baumwolle bestehenden Gurten 5 auf, deren Enden beispielsweise zur Befestigung aneinander mit Klettverschlußteilen 5' verbunden sein können. Andere Befestigungseinrichtungen werden später noch näher erläutert.

Im folgenden wird im Zusammenhang mit der Figur 2 näher erläutert, wie bei einer besonderen Ausführungsform die winkelförmigen stoßdämpfenden Einlagen 3 bzw. 3' beschaffen und in den inneren Eckbereichen der Schutzhülle 1 befestigt sind. Die Einlage verläuft gemäß Figur 2 so, daß sie einen Winkel, im dargestellten Fall etwa einen rechten Winkel, beschreibt, wobei vorzugsweise ein etwa diagonal zum Winkel verlaufender, wulstartiger Eckbereich 3" über den gebildeten Winkel nach außen hinausverläuft. Vorzugsweise wird die Einlage 3 bzw. 3' aus zwei streifenförmigen Teilen dadurch gebildet, daß die einen Seitenbereiche dieser Teile an den Innenseiten der einander zugewandten Seitenteile 2', 2" befestigt, zweckmäßigerweise vernäht werden und daß die über die Seitenteile 2', 2" überstehenden anderen Seitenbereiche dieser Teile aneinander angelegt werden, woraufhin ein Einfaßband 6 über die aneinander anliegenden Teile aufgelegt wird. Die beiden Teile werden dann miteinander und mit dem Einfaßband 6 insbesondere durch wenigstens eine quer durch die Teile und das Einfaßband 6 verlaufende Naht 7 verbunden. Auf diese Weise entsteht der bereits erwähnte Eckbereich der Schutzhülle 1, der eine stoßdämpfende Funktion und eine Führungsfunktion ausfüllt. Die stoßdämpfende Funktion wird insbesondere durch den diagonal nach außen ragenden Eckbereich 3" erhöht. Beim Transport ist gerade dieser Eckbereich 3" besonders stoßgefährdet. Es ist auch denkbar die winkelige Einlage 3, 3' aus einem streifenförmigen Teil zu bilden, das vorzugsweise mittig entsprechend gebogen wird, so daß der Winkel und der Eckbereich 3" entstehen.

Die Vernähung der Einlagen 3' an den oberen Kanten der Seitenteile 2' bzw. 2" und den Kanten des oberen Teiles 2 erfolgt in der entsprechenden Weise, wobei die am oberen Seitenteil 2 vernähten Schenkel der winkelförmigen Einlage 3' und die entsprechenden Schenkel der vertikal verlaufenden Einlage 3 einstückig ausgebildet sein können, wohingegen die an den oberen Kanten der Seitenteile 2', 2" vernähten Schenkel der Einlage 3' und die angrenzenden Schenkel der vertikalen Einlage 3 durch Schnitte voneinander getrennt sind.

Besonders bevorzugt besteht die Einlage 3, 3' aus einem Filzmaterial einer vorgegebenen Dicke.

Um zu verhindern, daß sich die Schenkel der Einlage 3 und 3' in einer nicht erwünschten Weise nach innen biegen, kann bevorzugt im Bereich zwischen den Schenkein und dem Eckbereich ein an der Innenseite der Schenkel in Längsrichtung verlaufender Einschnitt 3"' vorgesehen werden, der eine Aufspreizung der Schenkel bewirkt bzw. fördert. In den Figuren 1 und 2 ist dies schematisch durch die gepunktete Linie dargestellt. Bei einer Dicke der Einlage von etwa 5 mm verläuft der Einschnitt z.B. etwa 4 mm tief in die Schenkel hinein.

Im folgenden wird im Zusammenhang mit der Figur 3 eine weitere Ausgestaltung der Schutzhülle 1 erläutert, bei der durch gepunktete Linien dargestellte elastische Bereiche 8 vorgesehen sind, die ein Auseinanderziehen der Schutzhülle 1 senkrecht zur Längsrichtung der Bereiche 8 ermöglichen, so daß eine Anpassung der Schutzhülle 1 an Gegenstände 4 unterschiedlicher Größen ohne weiteres möglich ist. Beispielsweise verlaufen derartige elastische Bereiche 8 senkrecht zu einer möglichen vertikalen Mittelebene und/oder elastischen Bereiche 8' senkrecht zur anderen möglichen vertikalen Mittelebene 8' und/oder elastische Bereiche 8" senkrecht zur horizontalen Mittelebene. Bei der Vorsehung von Bereichen 8 und/oder 8' und/oder 8" ist vorzugsweise eine Anpassung im Hinblick auf die Länge und/oder die Breite und/oder die Höhe der Gegenstände 4 möglich. Die elastischen Bereiche 8, 8' bzw. 8" weisen vorzugsweise die Form von mit der Hilfe von Gummibändern oder dergleichen gerafften Bereichen auf, die sich bei der Anbringung der Schutzhülle 1 am Gegenstand 4 automatisch zur Anpassung auseinanderziehen. Die Bereiche 8, 8', 8" können auch so gebildet sein, daß in ihnen senkrecht zu ihrer Längserstrekkung in Kanälen Kordeln oder dergleichen verlaufen, auf denen das Material der entsprechenden Seitenteile zur Faltenbildung (Verkürzung des Seitenteiles) oder zur Entfaltung (Vergrößerung des Seitenteiles) verschoben werden kann.

Um einen Schutz der Seitenflächen des Gegenstandes 4 zu ermöglichen, können zwischen den einander zugewandten Kanten der Schenkel der Einlagen 3 und den einander zugewandten Flächen der Seitenteile 2' bzw. 2" und des Gegenstandes 4 gepolsterte Papp- oder Filzteile eingeschoben werden. Es ist auch denkbar, wie dies in der Figur 1 für das vordere Seitenteil 2' schematisch dargestellt ist, etwa im mittleren Bereich zwischen den vertikalen Einlagen 3 an der Innenfläche des Seitenteiles 2' streifenförmige stoßdämpfende Einlagen 30, die vorzugsweise ebenfalls aus Filz bestehen, vorzusehen.

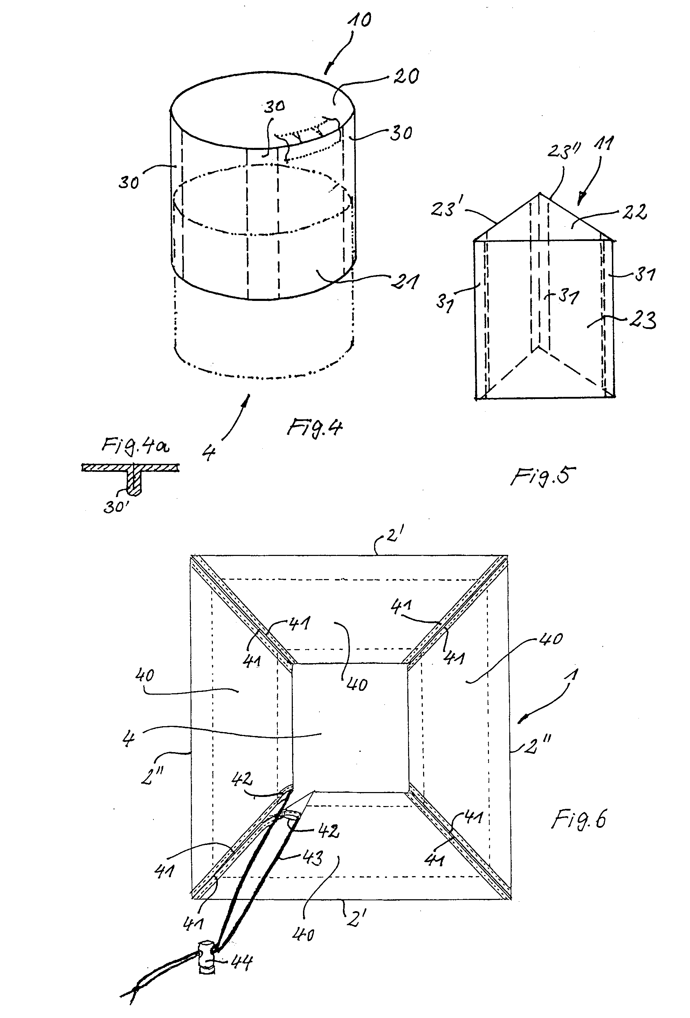

Im Zusammenhang mit der Figur 4 wird eine Schutzhülle 10 für einen Gegenstand 4 mit einem kreisförmigem Querschnitt erläutert. Die Schutzhülle 10 besteht aus einem oberen Teil 20, das mit einem Seitenteil 21 verbunden, vorzugsweise vernäht ist, so daß die Schutzhülle 10 die Form eines hohlen Zylinders mit einem kreisförmigen Querschnitt aufweist. Um einen Schutz für den Gegenstand 4 zu bilden, sind an der Innenseite des Seitenteiles 21 in Umfangsrichtung voneinander beabstandet mehrere streifenförmige Einlagen 30, die vorzugsweise aus Filz bestehen, befestigt, beispielsweise vernäht, die sich vom unteren Rand des Seitenteiles 21 bis zum oberen Teil 20 erstrekken. Auch diese Einlagen können gemäß Figur 4a nach außen ragende Vorsprünge 30' aufweisen, die in etwa den Eckbereichen der Figur 2 entsprechen. Ähnliche Einlagen, mit oder ohne Vorsprünge können auch, wie dies in Figur 4 schematisch und gepunktet dargestellt, zwischen dem oberen Teil 20 und dem Seitenteil 21 vorgesehen sein, wobei die erforderliche Biegung ermöglichende Einschnitte vorhanden sind.

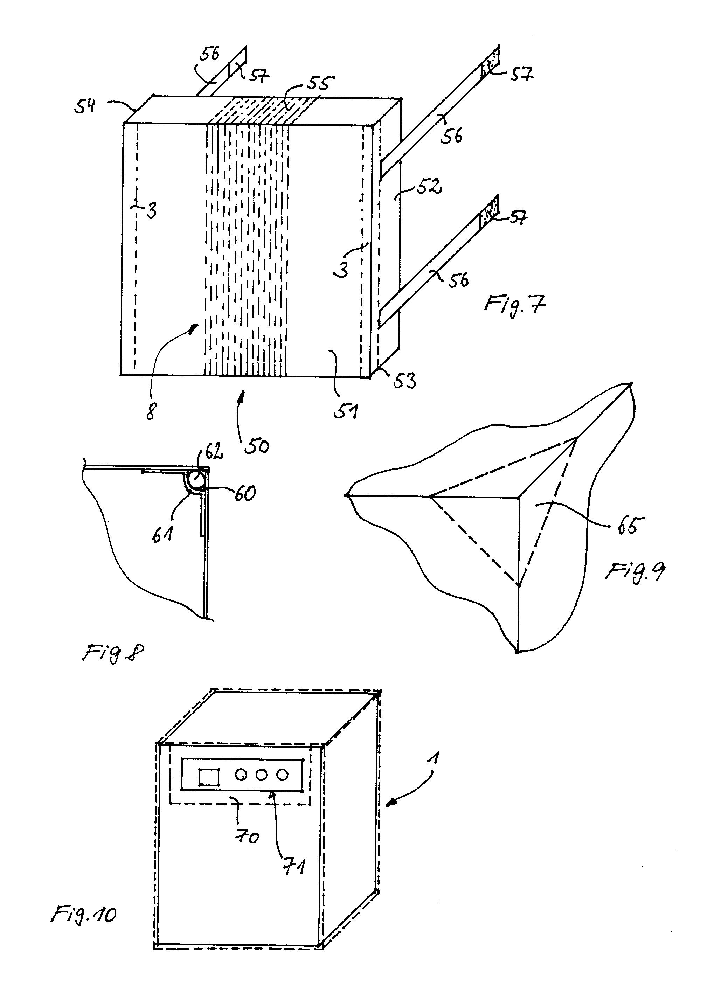

In der Figur 5 ist eine Schutzhülle 11 für einen Gegenstand mit einem beispielsweise dreieckigen Querschnitt erläutert. Die Schutzhülle 11 besteht aus einem oberen Teil 22 und Seitenteilen 23, 23', 23", die den Gegenstand oben bzw. seitlich umschließen, wenn die Schutzhülle 11 am Gegenstand angebracht ist. In den Eckbereichen der Seitenteile und gegebenenfalls auch in den Eckbereich zwischen den Kanten des oberen Teiles 22 und den Seitenteilen 23, 23', 23" sind, ähnlich wie bei der Ausführungsform der Figur 1 streifenförmige elastische Einlagen 31 angeordnet. Diese bestehen vorzugsweise aus Filz und können gemäß Figur 2 ausgestaltet sein. Es ist auch denkbar, die vorliegenden Schutzhüllen an andere, beliebige Formen von Gegenständen (z.B. ovale und vieleckige Formen) anzupassen, wobei die Stößen leicht ausgesetzten Bereiche, insbesondere Eckbereiche, mit den beschriebenen elastischen Einlagen versehen sind.

Als Zubehör für die beschriebene Schutzhülle 1, 10 oder 11 können aus Baumwolle, Jute, Leinen oder einem anderen verrottbaren Material, insbesondere Textilmaterial, bestehende Säckchen vorgesehen sein, in denen Zubehörteile, wie beispielsweise Schrauben, Muttern, Haltewinkel, Kabel und dergleichen, verpackt werden.

Im Zusammenhang mit der Figur 6 wird nun eine besonders bevorzugte Einrichtung zur Befestigung der Schutzhülle 1 am Gegenstand 4 erläutert.

Die Figur 6 zeigt eine Ansicht von unten auf die an einem Gegenstand 4 angeordnete Schutzhülle 1. Einzelheiten der Figur 6, die bereits im Zusammenhang mit den Figuren 1 und 2 erläutert wurden, sind in der entsprechenden Weise bezeichnet. In der erkennbaren Weise weisen die unteren Ränder der Seitenteile 2', 2" nach innen über die Unterseite des in der Schutzhülle 1 befindlichen Gegenstandes 4 faltbare Lappenbereiche 40 auf, die an den Seitenteilen 2', 2" befestigt, vorzugsweise vernäht, oder einteilig mit diesen ausgebildet sein können. Vorzugsweise sind die Lappenbereiche 40 in den Eckbereichen der Schutzhülle 1 so gestaltet, daß sie dort aneinandergrenzen. Bei einer einen rechteckigen Querschnitt aufweisenden Schutzhülle 1 bildet jede Kante 41 eines Lappenbereiches 40 vorzugsweise mit dem unteren Rand des entsprechenden Seitenteiles beispielsweise einen Winkel von 450. Vorzugsweise sind die innenliegenden Ränder der Lappenbereiche 40 so umgefaltet und aneinander befestigt, vorzugsweise vernäht, daß sie einen Kanal 42 bilden, durch den hindurch eine Kordel 43 oder dergleichen verläuft. Die in einem Eckbereich Zweier Lappenbereich 40 nach außen geführten Endbereiche der ringförmig durch den Kanal 42 verlaufenden Kordel 43 sind durch einen entlang dieser Endbereiche verschiebbaren Verschluß 44 geführt, durch den beliebige Punkte der Endbereiche aneinander befestigbar sind. Bei dem Verschluß 44 handelt es sich vorzugsweise um den dargestellten Kordelstopper, wie er beispielsweise bei Rucksäkken bekannt ist. Vor dem Verpacken eines Gegenstandes 4 wird der Verschluß 44 so weit nach außen auf den Endbereichen der Kordel 43 verschoben, daß die Lappenbereiche 40 zumindest in die Ebene der entsprechenden Seitenwände 2', 2" gebracht werden können. Zum Befestigen der Schutzhülle 1 am Gegenstand 4 wird der Verschluß 44 nach innen geschoben und verriegelt, wobei die Lappenbereiche 40 nach innen in die Lage der Figur 6 gebracht werden, in der sie die Unterseite des Gegenstandes 4 übergreifen.

Derartige Befestigungseinrichtungen sind auch bei den Ausführungsformen der Figuren 4 und 5 denkbar.

Aus der Figur 7 geht eine Weiterbildung der Erfindung hervor, gemäß der eine Abdeckung 50 auf den Öffnungsbereich der am Gegenstand 4 angebrachten Schutzhülle 1 aufsetzbar ist. Die Abdeckung kann die Form einer Kappe mit an ihre Vorderfläche 51 seitlich angesetzten Seitenbereichen 52, 53, 54 und 55 aufweisen, wobei in den Endbereichen zwischen den Seitenbereich 52, 53, 54 und/oder 55 und der Vorderfläche 51 die im Zusammenhang mit der Figur 2 erläuterten Einlagen 3 vorgesehen sein können. In dem Fall, in dem die Abdeckung 50 in ihrer Vorderfläche 51 zur Anpassung an Gegenstände 4 unterschiedlicher Größen einen elastischen Bereich 8 aufweist, entfallen die Seitenbereiche 53, 55 in der Verlängerung dieses elastischen Bereiches 8 oder sind auch in diesen entsprechende elastische Bereiche vorgesehen.

Zur Befestigung der Abdeckung 50 an der montierten Schutzhülle 1 sind mit wenigstens zwei sich gegenüberliegenden Seitenbereichen 52, 54 vorzugsweise wenigstens zwei voneinander beabstandete Gurtbänder 56 verbunden, zweckmäßigerweise vernäht, die insbesondere mit Klettverschlußteilen 57 an der Schutzhülle 1 befestigbar sind, die entsprechend angeordnete Klettverschlußteile an ihren entsprechenden Seitenteilen aufweist. Die Klettverschlußteile 57 sind dabei so an den Gurtbändern 56 außerhalb wichtiger Nähte angeordnet, daß sie zur Entsorgung einfach abgeschnitten werden können. Vorzugsweise befinden sich die Klettverschlußteile 57, wie dargestellt, an den Endbereichen der Gurtbänder 56.

Die Abdeckung 51, die Gurtbänder 56, die Einlagen 3 und der Bereich 8 können aus den oben im Zusammenhang mit der Schutzhülle 1 genannten Materialien bestehen bzw. sind in der oben beschriebenen Weise gestaltet.

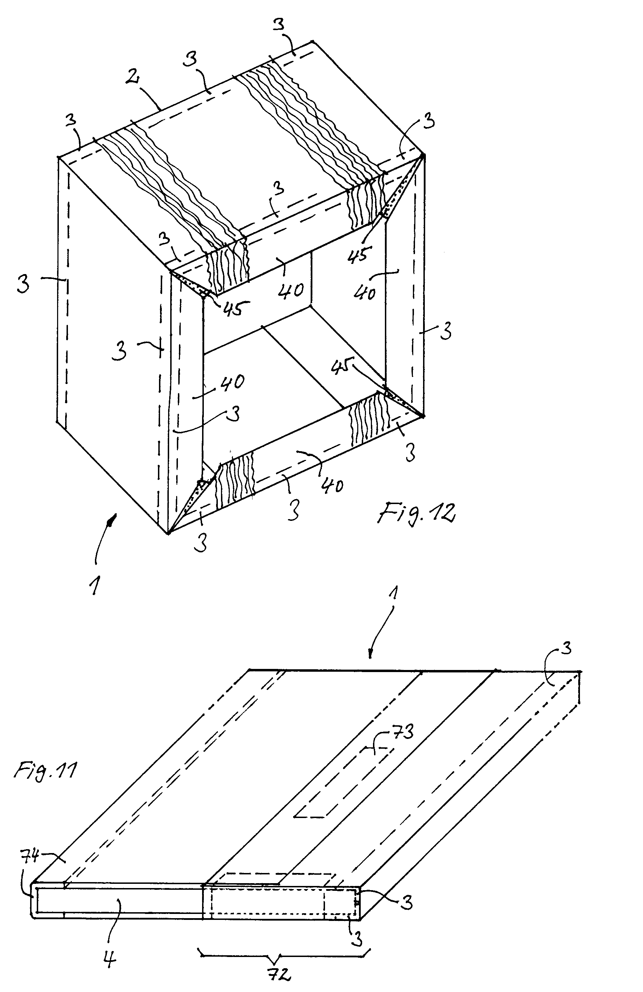

Es ist auch denkbar die in Kantenbereichen vorgesehenen stoßdämpfenden Einrichtungen, dadurch zu bilden, daß gemäß Figur 8, die einen Schnitt durch einen Kantenbereich zeigt, in den Kantenbereichen Kanäle 60, zweckmäßigerweise durch Aufnähen einer den Kantenbereich überbrükkenden Materialbahn 61 gebildet werden, in die die stoßdämpfende Einrichtungen 62 eingeschoben werden. Diese Einrichtungen 62 können aus einem nicht verrottbaren Material bestehen und vor der Entsorgung der Verpackung aus den Kanälen 60 herausgezogen werden, um entweder getrennt entsorgt oder bei anderen Verpackungen wieder verwendet zu werden. Beispielsweise weisen diese Einrichtungen 62 die Form von stabartigen, elastischen Gummi- oder Schaumstoffteilen auf. Es ist auch denkbar, als Einrichtungen 62 längliche, aufblasbare schlauchartige Kunststoffteile in die Kanäle 60 einzuschieben. Gemäß Figur 9 ist es ferner denkbar, daß in die Eckbereiche der Schutzhülle vorzugsweise von innen her Eckenschutzelemente 65 eingesetzt und befestigt werden, die aus einem relativ steifen, aber doch elastischen und daher stoßdämpfenden Material, beispielsweise aus einem verrottbaren Filzmaterial einer vorbestimmten Dicke bestehen. Diese Eckenschutzelemente 65 dienen ebenfalls dazu die Schutzhülle bei ihrer Montage am Gegenstand 4 zu führen und zu justieren, derart, daß die Eckenschutzbereiche 65 infolge ihrer Steifigkeit auf die Eckbereiche gelangen und an diesen in den richtigen Lagen festgehalten werden.

Gemäß Figur 10 kann die vorliegende Verpakkung an der Innenseite eines Seitenteiles der Schutzhülle 1 in einem vorgegebenen Bereich, der nach der Montage der Schutzhülle am Gegenstand 4 ein besonders zu schützender Bereich 71 überdeckt, bei dem es sich beispielsweise um eine Schalttafel mit stoßempfindlichen Anzeigegeräten und Schaltern etc. handelt, mit einem stoßdämpfenden Schutzbereich 70 versehen, der beispielsweise durch eine verrottbare Filzschicht gebildet wird.

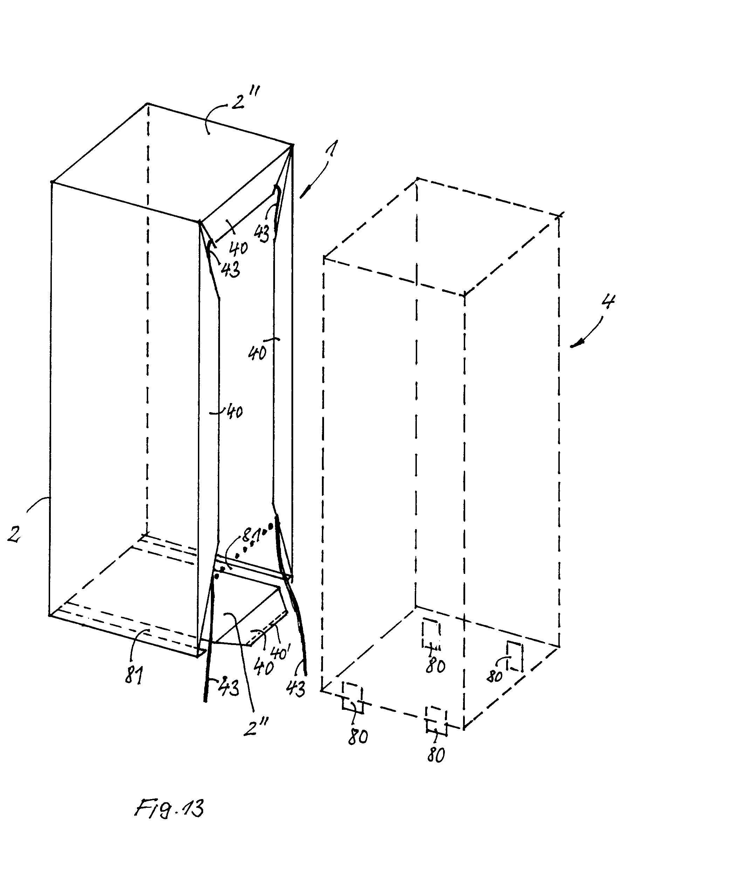

Aus der Figur 11 geht eine vorliegende Verpakkung hervor, bei der die Schutzhülle 1 an die Form eines plattenförmigen Gegenstandes 4, bei dem es sich beispielsweise um eine Arbeitsfläche eines Küchenblockes handelt, angepaßt ist. Die eine Seite der Schutzhülle 1 weist dabei ein taschenartiges Aufnahmeteil 72 auf, in die der plattenartige Gegenstand eingeschoben wird. Wenigstens die in Längsrichtung verlaufenden Kanten des Aufnahmeteiles 72 sind mit stoßdämpfenden Einlagen 3 versehen. Die andere Seite der Schutzhülle 1 ist so gestaltet, daß sie wie ein Umschlag um das andere Ende des Gegenstandes 4 herumgelegt und am Aufnahmeteil 72 beispielsweise mit einem Klettverschluß 73 oder einer anderen Einrichtung befestigt werden kann. Im Kantenbereich weist die andere Seite der Schutzhülle 1 an ihrer Innenseite eine in Längsrichtung verlaufende stoßdämpfende Einrichtung, vorzugsweise in der Form eines verrottbaren Filzstreifens 74 auf, der die entsprechenden Endkanten des Gegenstandes 4 schützend umgibt und bei der Montage der Schutzhülle 1 winkelig abgebogen wird. Vorzugsweise kann das Aufnahmeteil 72 auch in der Querrichtung mit Einlagen 3 versehen sein.

In der Längsrichtung kann die Schutzhülle an den größstmöglichen plattenförmigen Gegenstand angepaßt sein. Bei der Verpackung kleinerer Gegenstände wird dann der überstehende Bereich der Schutzhülle einfach über den verpackten Gegenstand umgeschlagen.

Im Zusammenhang mit der Figur 12 wird nun eine weitere Ausführungsform der vorliegenden Verpackung erläutert, bei der die Schutzhülle 1 im Bereich der Kanten ihrer Öffnungen und im Bereich der Kanten ihres der Öffnung gegenüberliegenden oberen Teiles 2 mit den beschriebenen stoßdämpfenden Einlagen 3 versehen ist. Die Befestigung dieser Schutzhülle 1 an einem Gegenstand 4 kann beispielsweise mit den im Zusammenhang mit der Figur 6 beschriebenen Lappenbereichen 40, die wie oben beschrieben mit der Hilfe von Kordeln (nicht dargestellt) oder auch von die einander zugewandten, nach innen ragenden schrägen Seitenkanten der Lappenbereiche 40 elastisch zusammenhaltenden Materialteilen 45, beispielsweise in der Form von Gummibändern oder dergleichen, zusammengehalten werden, erfolgen.

Es ist auch denkbar, die bisher beschriebenen Schutzhüllen an ihren gesamten Innenflächen mit einer schützenden Filzschicht zu versehen, wobei jedoch Eck- und/oder Kantenbereiche mit den beschriebenen Einlagen bzw. Eckschutzbereichen versehen sind. Im Falle einer Anpassungsmöglichkeit gemäß Figur 3 an verschiedene Größen von Gegenständen ist diese Filzschicht dann in den entsprechenden elastischen Bereichen unterbrochen, wobei im zusammengezogenen Zustand der elastischen Bereiche die Unterbrechnung der Filzschicht geschlossen ist und die entsprechenden Bereiche des jeweiligen Seitenteiles oder oberen Teiles sich im Gebiet der geschlossenen Unterbrechung falten. Um bestimmte Polstereffekte zu erreichen, kann die beschriebene Filzschicht durch Steppnähte an den Seitenteilen bzw. dem oberen Teil und gegebenenfalls den Lappenbereichen vernäht sein.

Es wurde beschrieben, daß die Schutzhülle 1 am Gegenstand 4 von oben nach unten gezogen wird. Es ist jedoch auch denkbar, die Schutzhülle 1 von einer beliebigen Seite des Gegenstandes 4 zur gegenüberliegenden Seite desselben zu ziehen.

In der Figur 13 ist eine weitere Ausführungsform der vorliegenden Schutzhülle beschrieben, die insbesondere zur Verpackung von höheren Einbauschränken und dergleichen geeignet ist, wobei die Schutzhülle von einer Seite her über den Schrank 4 gezogen wird. Da der Schrank 4 an seiner Bodenfläche Fußteile 80 aufweist, sind in dem entsprechenden Seitenteil 2" vom oberen Teil 2 in der Aufziehrichtung, d.h. also senkrecht zum oberen Teil 2, verlaufende Schlitze 81 vorhanden, die sich vorzugsweise an der dem oberen Teil 2 abgewandten Ende des Seitenteiles 2" nach außen öffnen. Auf diese Weise können die Fußteile 80 auch während der Aufziehoperation durch die Schlitze 81 hindurchragen, wenn eine Befestigung der Schutzhülle 1 durch die dargestellten Befestigungslappen 40 erfolgt, wird die Kordel 43, die durch die Kanäle des oberen und der seitlichen Befestigungslappen 40 verläuft, nach dem Anbringen der Schutzhülle 1 durch den Kanal des unteren Befestigungslappen 40' gezogen und in der oben beschriebenen Weise festgezogen.

Bei dieser Ausführungsform ist es auch denkbar, die nach außen geführten Enden der Kordel 43 entlang der gepunktet dargestellten Linie aneinander zu befestigen und den Lappenbereich 40 des unteren Seitenteiles 2", der in diesem Fall keinen Kanal 40' aufzuweisen braucht, derart zu verlängern, daß er nach oben bis unter die aneinander befestigten Enden der Kordel 43 geführt und anschließend über den Kordelenden gefaltet und wieder nach unten geführt werden kann. Eine Befestigung des Lappenbereiches erfolgt dann dadurch, daß das Ende desselben mit der Hilfe einer Befestigungseinrichtung am nach oben geführten Teil des Lappenbereiches 40 befestigt wird. Die Befestigungseinrichtung besteht vorzugsweise aus Klettverschlußteilen.

Die beschriebenen winkelförmigen Eckelemente erfüllen neben einer stoßdämpfenden Funktion noch eine weitere wesentliche Funktion. Beim Anbringen der Schutzhülle am Gegenstand wirken sie nämlich als eine Art "Führungsschiene" da sie die schutzhülle aussteifen. Auf diese Weise kann die Schutzhülle ganz einfach von einer Seite her auf den Gegenstand aufgeschoben werden, ohne daß die Gefahr besteht, daß sich das bei der Aufschiebeoperation außerhalb des Gegenstandes noch befindliche Ende der Schutzhülle in einer die Aufschiebeoperation störenden Weise verdreht bzw. abbiegt, was ohne die Vorsehung der stoßdämpfenden Eckelemente wegen der Flexibilität des Materials der seitenteile und des oberen Teiles leicht möglich wäre. Die in der genannten patentanmeldung beschriebene Schutzhülle kann daher besonders gut von Automaten an Gegenständen angebracht werden, die bevorzugt mit vier Greifarmen oder dergleichen an den unteren Endbereichen der Schutzhülle angreifen und diese über den Gegenstand ziehen. Wenn sich die Eckelemente nur in Kantenbereichen der der Öffnung gegenüberliegenden Seitenwand befinden, wird erreicht, daß beim Anbringen der Schutzhülle diese Seitenwand automatisch an der entsprechenden Stirnfläche des Gegenstandes justiert wird.

Durch die etwa diagonal zum gebildeten Winkel nach außen vorstehenden wulstartigen Bereiche der Eckelemente wird ein besonderer Schutz der entsprechenden Kanten des Gegenstandes vor Stoßeinwirkungen beim Transport erreicht.

Im folgenden werden Verpackungen beschrieben, bei denen die Bildung der winkelförmigen Eckelemente relativ einfach ist.

Ein wesentlicher Vorteil dieser erfindungsgemäßen Verpackungen besteht darin, daß die winkelförmigen Eckelemente relativ einfach und daher kostengünstig herstellbar sind. Dies hat zur Folge, daß die gesamte Verpackung kostengünstiger herstellbar ist. Insbesondere ist es bei diesen erfindungsgemäßen Verpackungen nicht erforderlich, in einer getrennten Befestigungsoperation einen zusätzlichen Filzstreifen oder dergleichen an den Seitenteilen der Schutzhülle zu vernähen. Das Befestigen eines speziellen Einfaßbandes ist ebenfalls nicht erforderlich.

Ein wesentlicher Vorteil einer besonders bevorzugten Ausführungsform dieser erfindungsgemäßen Verpackung besteht darin, daß infolge der Umfaltung der Kantenbereiche der Seitenwände nach außen zur Bildung der winkelförmigen Eckelemente im Inneren der Verpackung in den gebildeten Eckbereichen keine Teile vorhanden sind, die sich beim Einschieben eines Gegenstandes an demselben verhaken könnten.

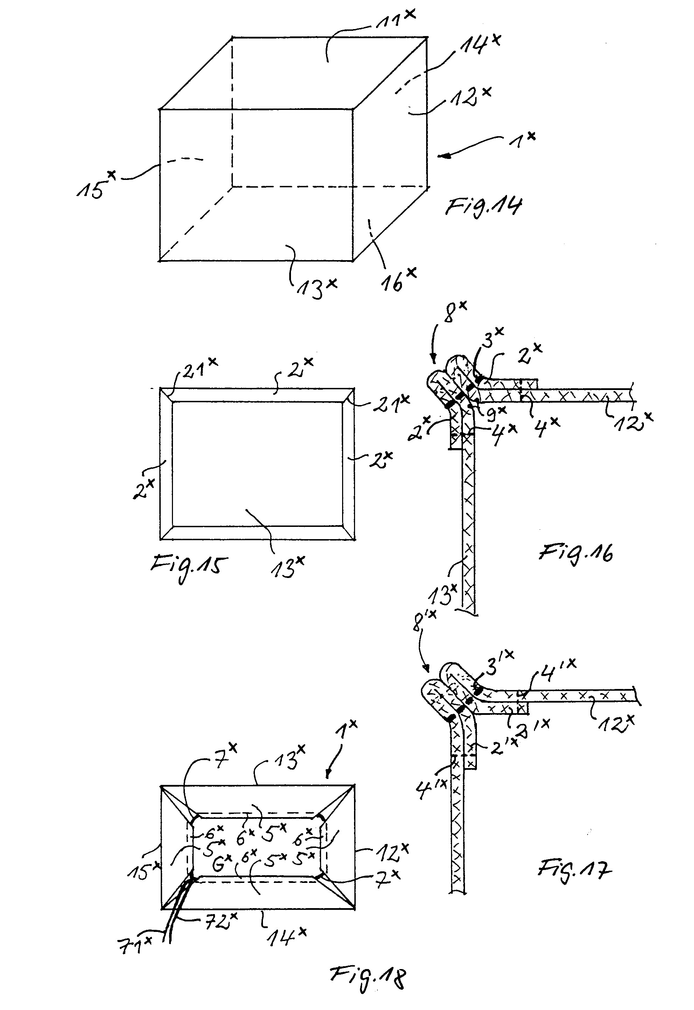

Gemäß Figur 14 besteht eine zur Verpackung eines quaderförmigen Gegenstandes gedachte vorliegende Verpackung 1^{*} im wesentlichen aus einer einer Öffnung 16^{*} gegenüberliegenden rechteckigen ersten Seitenwand 11 und unter rechten Winkeln daran angrenzenden Seitenwänden 12^{*}, 13^{*}, 14^{*} und 15^{*}. Die der Seitenwand 11 abgewandten Randbereiche der Seitenwände 12^{*}, 13^{*} und 15^{*} umgrenzen die Öffnung 16^{*}, durch die zur Verpakkung ein nicht dargestellter Gegenstand in die Schutzhülle 1^{*} eingeschoben wird.

Die Seitenwände 11 bis 15^{*} bestehen vorzugsweise aus Filz- oder Vliesmaterialien, die aus Naturfasern, Kunststoffasern oder Mischfasern bestehen können. Bei der Verwendung von Kunstfasern können nach der Ausmusterung die Verpackungsmaterialien wieder eingeschmolzen und zur Herstellung neuer Vlies- oder Filzmaterialien verwendet werden. Naturfasern können nach der Ausmusterung in der Form von Füll- oder Dämmaterialien, Putzwolle oder Putzlappen einer Wiederverwendung zugeführt werden. Bei der Verwendung von Mischfasern, die z.B. besonders preiswert durch Zerreißen von gebrauchten Textilien oder Textilabfällen, die bei der Herstellung und Veredelung von textiler Meterware entstehen, oder dergleichen und Verpressen, gegebenenfalls unter Zugabe von Bindemitteln gewonnen werden können, kann eine Wiederverwendung durch erneutes Zerreißen und Verpressen, gegebenenfalls unter Zugabe von Bindemitteln erfolgen.

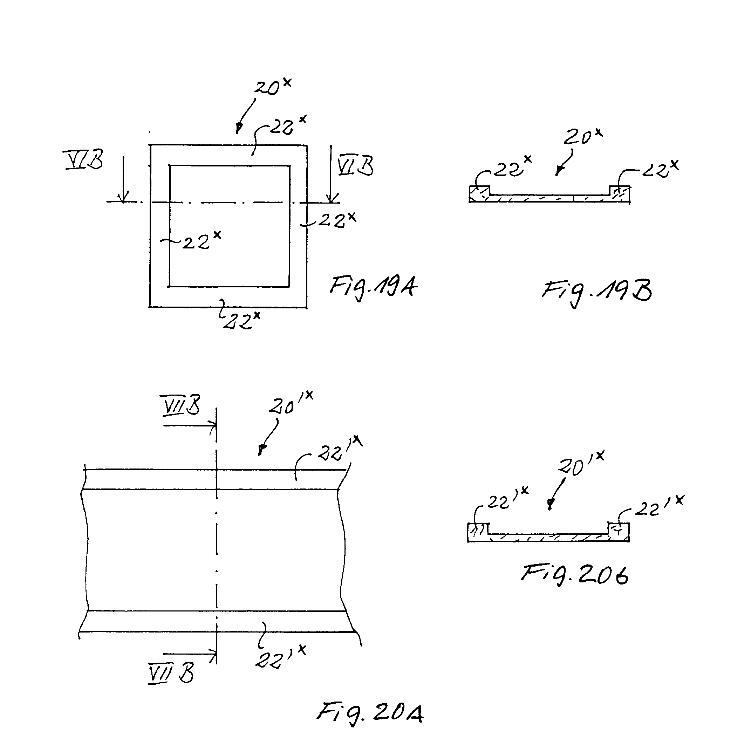

Zur Herstellung von winkelförmigen, stoßdämpfenden Eckelementen 8^{*} bzw. 8'* (siehe Figur 16 bzw. Figur 17) werden die Randbereiche der Seitenteile 11* bis 15^{*} in der in der Figur 15 am Beispiel des Seitenteiles 13^{*} dargestellten Weise derart umgefaltet, daß sie auf dem Material des Seitenteiles 13^{*} zu liegen kommen. Vorzugsweise werden die umgefalteten Bereiche 2^{*} in den Eckbereichen des Seitenteiles 13^{*} schräg abgeschnitten, so daß sie sich in den Eckbereichen nicht überlappen. Insbesondere werden die umgefalteten Bereiche 2^{*} unter Bildung von den rechten Winkel der entsprechenden Ecke bildenden Teilwinkeln, wobei jeder Teilwinkel vorzugsweise 45 beträgt, eingeschnitten, so daß die schrägen Kanten 21* der umgefalteten Bereiche 2^{*} in einer Ecke aneinanderliegen.

Es wird darauf hingewiesen, daß vorzugsweise die beschriebenen umgefalteten Bereiche 2^{*} an allen Kantenbereichen der Seitenwandteile 11* bis 15^{*} vorgesehen werden. Es ist jedoch auch denkbar, die umgefalteten Bereiche 2^{*} bzw. die winkelförmigen Eckelemente 8^{*} bzw. 8'* nur an vorbestimmten Kantenbereichen der Seitenwandteile 11* bis 15^{*} Vorzusehen. Insbesondere können diese winkelförmigen Eckelemente 8^{*} bzw. 8'* im Randbereich der Öffnung 16^{*} der Seitenwandteile 11 bis 15^{*} entfallen, wie dies nachfolgend noch näher erläutert werden wird.

Gemäß Figur 16 werden besonders bevorzugt die gefalteten Bereiche 2^{*} nach außen umgeschlagen und vorzugsweise mit der Hilfe einer Naht 4^{*} im Endbereich des umgeschlagenen Bereiches an dem entsprechenden Seitenwandteil befestigt, vorzugsweise vernäht. In der Figur 16 ist das Beispiel eines winkelförmigen Eckelementes zwischen den Seitenwandteilen 12^{*} und 13^{*} dargestellt. Es ist auch denkbar anstelle der Anordnung einer Naht 4^{*} die umgefalteten Bereiche 2^{*} in einer anderen Weise an den Seitenwandteilen 12^{*}, 13^{*} zu befestigen, beispielsweise zu verkleben bzw. durch thermische Erwärmung zu fixieren.

Zur Bildung des winkelförmigen Eckelementes 8^{*}, das entlang der gemeinsamen Kante zwischen den Seitenwandteilen 12* und 13^{*} verläuft, werden nun noch die freien Endbereiche der umgefalteten Bereiche 2* der Seitenwandteile 12* und 13^{*} aneinander befestigt. Vorzugsweise erfolgt dies durch eine einzige Naht 3^{*} durch Vernähen, Verkleben oder thermische Fixierung.

Um ein Aufweiten der derart über die winkelförmigen Eckelemente 8^{*} aneinander befestigten Seitenwandteile 12^{*}, 13^{*} zu erleichtern, können entlang der durch die Seitenwandteile 12^{*}, 13^{*} gebildeten Kante Eindrück- bzw. Einritzlinien 9^{*} in den Seitenwandteilen 12^{*}, 13^{*} gebildet werden, die ein Abknicken der Seitenwandteile 12^{*}, 13^{*} und die Bildung eines Eckwinkels von etwa 90 erleichtern.

Bei der Ausführungsform der Figur 16 ist es besonders vorteilhaft, daß infolge der nach Faltung der Bereiche 2^{*} nach außen im Inneren der Schutzhülle 1* zwischen den Seitenwandteilen 12^{*}, 13^{*} eine saubere Ecke entsteht, in der der entsprechende Eckbereich des zu verpackenden Gegenstandes unbehindert vom Bereich der Öffnung 16^{*} aus bis zur Stirnwand 11* und bis zur Anlage an derselben gleiten kann.

Die Figur 17 zeigt eine Ausführungsform der vorliegenden Verpackung, die im wesentlichen derjenigen der Figur 16 entspricht, wobei jedoch die umgefalteten Bereiche 2'* nach innen gefaltet sind.

Der Figur 18 zeigt eine bevorzugte Einrichtung zum Verschließen der Schutzhülle 1^{*} nach dem Verpacken eines Gegenstandes G^{*.} Diese Einrichtung besteht aus an die Seitenwandteile 12* bis 15^{*} angesetzte bzw. aus einteilig mit diesen ausgeformten Lappenteilen 5^{*}, die nach Aufschieben der Schutzhülle 1^{*} auf den Gegenstand G^{*} nach innen geschlagen werden können. Die Endbereiche der Lappenteile 5^{*} weisen vorzugsweise Kanäle 6^{*} auf, in denen eine Zugeinrichtung 7*, zweckmäßigerweise eine Kordel oder dergleichen, geführt ist. Die Kanäle sind vorzugsweise durch Umfalten, insbesondere durch Umnähen der Endbereiche der Lappenteile 6^{*} gebildet. Nach dem Verpacken des Gegenstandes werden die in einer gemeinsamen Ecke Zweier Lappenteile 6^{*} nach außen geführten Endbereiche 71*, 72* der Zugeinrichtung 7* aneinander befestigt, was beispielsweise durch Verknoten oder mit der Hilfe eines sogenannten Kordelstoppers (nicht dargestellt) erfolgen kann, so daß die Lappenbereiche 6^{*} über die entsprechende Stirnfläche des Gegenstandes G^{*} gespannt werden.

Anstelle der beschriebenen Zugeinrichtung können zur Befestigung der Lappenteile 5^{*} aneinander auch andere Befestigungsmittel, beispielsweise in der Form von Klettverschlußteilen, vorgesehen werden. Außerdem ist es auch denkbar anstelle der dargestellten vier Lappenteile 5^{*} nur zwei sich gegenüberliegende Lappenteile oder drei Lappenteile vorzusehen.

Die Lappenteile 6^{*} können entweder einteilig mit den entsprechenden Seitenwandteilen 12* bis 15^{*} ausgebildet sein, wobei sie einfach ausgehend vom Randbereich der Öffnung 16^{*} nach innen gefaltet werden, oder unter Anordnung von winkelförmigen Eckelementen 8^{*} bzw. 8'* entsprechend der Figur 16 bzw. 17 an die unteren Enden der Seitenwandteile 12* bis 15^{*} angesetzt sein.

Es ist auch denkbar, die Kanäle in den Lappenteilen 5^{*} dadurch herzustellen, daß die Lappenteile durch mittiges Falten eines Materialstreifens gebildet werden, wobei dann die aufeinanderliegenden Enden des gefalteten Streifens ein Bereich der unteren Kante des jeweiligen Seitenwandteiles 12* bis 15^{*} befestigt, vorzugsweise vernäht werden. Dabei kann die eine Hälfte des Materialstreifens auch einteilig an das jeweilige Seitenteil 12* bis 16^{*} angeformt sein.

Im Zusammenhang mit den Figuren 19 A, B und 20 A, B werden Weiterbildungen der Erfindung erläutert, bei denen die Seitenwandteile 11* bis 15^{*} aus vorgefertigten Wandteilen 20^{*} hergestellt werden, die an denjenigen Kantenbereich, an denen Eckelemente vorgesehen werden sollen, eine größere Dicke aufweisen als in den sonstigen Bereichen. Beispielsweise werden derartige Wandteile 20^{*} durch Präge- und Schneideoperationen hergestellt, wobei ein Filz- oder Vliesmaterial, das die größere Dicke des angesprochenen Kantenbereiches aufweist, in einem Prägeschritt außerhalb dieses Kantenbereiches auf die kleinere Dicke verdichtet wird. Gleichzeitig mit dem Prägeschritt kann das Wandteil auf die gewünschte Größe des jeweiligen Seitenwandteiles 11* bis 15^{*} geschnitten werden. Gemäß Figur 19 A, B weist ein solches Wandteil 20^{*} in seinen Kantenbereichen 22* die größere Dicke auf.

Gemäß Figur 20 A, B können aus einem bahnförmigen Filz- oder Vliesmaterial 20'*, das so geprägt ist, daß seine gegenüberliegenden Kantenbereiche 22'* die größere Dicke aufweisen, durch einfaches Abschneiden von Teilen gewünschter Längen Seitenwandteile 11 bis 15^{*} hergestellt werden, die an zwei sich gegenüberliegenden Kanten Winkelteile aufweisen sollen.

Beispielsweise weisen derartig hergestellte Wandteile 20^{*}, 20'* in den Kantenbereichen 22^{*}, 22'* eine Dicke von etwa 2 cm auf, während sie in den restlichen Bereichen eine Dicke von etwa 1 cm besitzen.

## Patentansprüche

1. Verpackung für einen Gegenstand (4), wobei die Verpackung den Gegenstand (4) im verpackten Zustand an einer ersten Fläche und den daran angrenzenden weiteren Flächen schützend umgibt, dadurch gekennzeichnet, daß die Verpackung die Form einer zu einer Seite hin offenen, flexiblen Schutzhülle (1) aufweist, die über den Gegenstand (4) stülpbar ist und daß in Kanten- und/oder Eckbereichen der Schutzhülle (1) stoßdämpfende Einrichtungen (3) mit einer vorgegebenen Festigkeit vorgesehen sind, derart daß sie eine bei der Anbringung der Schutzhülle (1) am Gegenstand (4) eine Führungs- und/oder Justierfunktion erfüllen.

2. Verpackung nach Anspruch 1, dadurch gekennzeichnet, daß die Schutzhülle (1) aus einem verrottbaren Material besteht.

3. Verpackung nach Anspruch 2, dadurch gekennzeichnet, daß das Material durch Baumwolle, Jute oder Leinen gebildet ist.

4. Verpackung nach einem der Ansprüche 1 bis 3, dadurch gekennzeichnet, daß die Schutzhülle (1) an ihrem Offnungsbereich eine Einrichtung (5, 5'; 40 bis 44) zur Befestigung der Schutzhülle (1) an dem Gegenstand (4) aufweist.

5. Verpackung nach einem der Ansprüche 1 bis 4, dadurch gekennzeichnet, daß die Schutzhülle (1) ein vieleckiges, insbesondere ein rechteckiges, oberes Flächenteil (2) und daran angeordnete Seitenteile (2', 2") derart aufweist, daß die Schutzhülle (1) einen entsprechenden vieleckigen, insbesondere rechteckigen Gegenstand (4) übergreifen kann.

6. Verpackung nach Anspruch 5, dadurch gekennzeichnet, daß stoßdämpfende Einrichtungen (3) in den Kantenbereichen der Seitenteile (2', 2") angeordnet sind und im wesentlichen ausgehend von dem oberen Seitenteil (2) zum unteren Randbereich der Seitenteile (2', 2") verlaufen.

7. Verpackung nach Anspruch 5 oder 6, dadurch gekennzeichnet, daß stoßdämpfende Einrichtungen (3') in wenigstens zwei sich gegenüberliegenden Kantenbereichen zwischen dem oberen Flächenteil (2) und den Seitenteilen (2', 2") angeordnet sind.

8. Verpackung nach einem der Ansprüche 1 bis 7, dadurch gekennzeichnet, daß die stoßdämpfenden Einrichtungen (3, 3') die Form von abgewinkelten Einlagen aufweisen, die entlang der Kantenbereiche verlaufen.

9. Verpackung nach Anspruch 8, dadurch gekennzeichnet, daß die Einlagen (3) dadurch geformt sind, daß zwei streifenförmige Ausgangsmaterialien so abgewinkelt und aneinander befestigt sind, daß im Bereich, in dem die Schenkel des gebildeten Winkels aneinandergrenzen ein nach außen überstehender Eckbereich (3") gebildet ist, der etwa in der Verlängerung der Diagonalen des gebildeten Winkels verläuft.

10. Verpackung nach Anspruch 9, dadurch gekennzeichnet, daß in die Schenkel im Bereich der gebildeten Eckkante von innen Einschnitte (3"') eingebracht sind, die entlang der Schenkel verlaufen und sich eine vorbestimmte Strecke in die Schenkel hineinerstrecken.

11. Verpackung nach Anspruch 9 oder 10, dadurch gekennzeichnet, daß jeweils ein Seitenteil (2', 2") über einen Schenkel der abgewinkelten Einlage (3, 3') verläuft und an diesem befestigt ist, daß über die Endkanten der Seitenteile (2, 2', 2") und den Eckbereich (3") ein Gurtband (6) verläuft und daß das Gurtband (6) an dem Eckbereich (3") befestigt ist.

12. Verpackung nach Anspruch 11, dadurch gekennzeichnet, daß das Gurtband (6) durch wenigstens eine durch den Eckbereich (3") verlaufende Naht (7) befestigt ist.

13. Verpackung nach einem der Ansprüche 1 bis 7, dadurch gekennzeichnet, daß die Einlagen (30) die Form von an Innenflächen von Seitenteilen (2', 2") voneinander beabstandeten Streifen aufweist, die im wesentlichen von dem oberen Seitenteil (2) bis zum unteren Rand der Seitenteile (2', 2") verlaufen.

14. Verpackung nach einem der Ansprüche 1 bis 7, dadurch gekennzeichnet, daß die stoßdämpfende Einrichtung die Form von innen an Eckbereichen der Schutzhülle (1) befestigten stoßdämpfenden Eckschutzelementen (65) aufweist, die an die Form der Ecken des Gegenstandes (4) angepaßt sind.

15. Verpackung nach einem der Ansprüche 1 bis 14, dadurch gekennzeichnet, daß die stoßdämpfende Einrichtung aus einem verrottbaren Material besteht.

16. Verpackung nach Anspruch 15, dadurch gekennzeichnet, daß die stoßdämpfende Einrichtung aus Filz einer vorbestimmten Dicke besteht.

17. Verpackung nach einem der Ansprüche 1 bis 7, dadurch gekennzeichnet, daß die stoßdämpfende Einrichtung die Form einer Einlage (62) aufweist, die in an den Kantenbereichen gebildete Kanäle (60) einschiebbar sind.

18. Verpackung nach Anspruch 17, dadurch gekennzeichnet, daß die Einlage ein stabartiges, elastisches Gummi- oder Schaumstoffteil oder ein aufblasbares, schlauchartiges Kunststoffteil ist.

19. Verpackung nach einem der Ansprüche 4 bis 18, dadurch gekennzeichnet, daß die Einrichtung zur Befestigung der Schutzhülle (1) aus Bändern (5) aus einem verrottbaren Material besteht, die am unteren Rand der Seitenteile (2', 2") so angeordnet sind, daß sie den Öffnungsbereich überspannend aneinander befestigbar sind.

20. Verpackung nach Anspruch 19, dadurch gekennzeichnet, daß die Enden der Bänder (5) mit Klettverschlußteilen (5') versehen sind.

21. Verpackung nach einem der Ansprüche 1 bis 20, dadurch gekennzeichnet, daß die unteren Enden von Seitenteilen (2', 2") als Einrichtung zur Befestigung nach innen ragende Lappenbereiche (40) aufweisen, an denen Kanäle (42) gebildet sind, durch die eine Kordel (43) oder dergleichen verläuft, deren Endbereiche an zwei aneinandergrenzenden Lappenbereichen (40) nach außen geführt sind.

22. Verpackung nach Anspruch 21, dadurch gekennzeichnet, daß die freien Endbereiche durch einen Gleitverschluß (44) verlaufen, der entlang der freien Endbereiche zum Öffnen und Verschließen der durch die Lappenbereiche (40) gebildeten Einrichtung zur Befestigung verschiebbar ist.

23. Verpackung nach einem der Ansprüche 1 bis 22, dadurch gekennzeichnet, daß eine an einen Gegenstand mit einem rechteckigen Querschnitt angepaßte Schutzhülle (1) senkrecht zu einer durch die Seitenteile (2', 2") parallel zum oberen Seitenteil (2) verlaufende Ebene wirkende elastische Bereiche (8") und/oder senkrecht zu einer Längsebene durch das obere Flächenteil verlaufenden Ebene wirkende elastische Bereiche (8) in dem oberen Seitenteil und den entsprechenden Seitenteilen und/oder senkrecht zu der Querebene durch das obere Seitenteil verlaufende Ebene wirkende elastische Bereiche (8') in dem oberen Seitenteil und den entsprechenden Seitenteilen aufweist.

24. Verpackung nach Anspruch 23, dadurch gekennzeichnet, daß die elastischen Bereiche die Form von mit der Hilfe von federnden Bändern gerafften Bereichen aufweisen.

25. Verpackung nach Anspruch 24, dadurch gekennzeichnet, daß die federnden Bänder Gummibänder sind.

26. Verpackung nach Anspruch 23, dadurch gekennzeichnet, daß die elastischen Bereiche durch an den Seitenteilen in Kanälen geführten Kordeln oder dergleichen gebildet sind, durch die die Bereiche unter Faltenbildung wahlweise raffbar sind.

27. Verpackung nach einem der Ansprüche 1 bis 26, dadurch gekennzeichnet, daß eine den Öffnungsbereich der montierten Schutzhülle (1) verschließende Abdeckung (50) vorgesehen ist, die eine Vorderfläche (51) aufweist, an die wenigstens an zwei sich gegenüberliegende Kanten Seitenbereiche (52 bis 55) angeformt sind, die die entsprechenden Seitenteile der montierten Schutzhülle (1) übergreifen.

28. Verpackung nach Anspruch 27, dadurch gekennzeichnet, daß in Kantenbereichen zwischen der Vorderfläche (51) und den entsprechenden Seitenbereichen (52 bis 54) stoßdämpfende Einrichtungen (3) nach einem der Ansprüche 8 bis 18 angeordnet sind.

29. Verpackung nach einem der Anspruch 27 oder 28, dadurch gekennzeichnet, daß an wenigstens zwei gegenüberliegenden Seitenbereichen (52, 54) Gurtbänder (56) oder dergleichen zur Befestigung der Abdeckung (50) an der Schutzhülle (1) befestigt sind.

30. Verpackung nach Anspruch 29, dadurch gekennzeichnet, daß die Gurtbänder (56) Klettverschlußteile (57) aufweisen, die an entsprechenden Klettverschlußteilen der Schutzhülle (1) befestigbar sind.

31. Verpackung nach einem der Ansprüche 27 bis 30, dadurch gekennzeichnet, daß die Abdekkung (50) wenigstens einen elastischen Bereich (8) in der Vorderfläche (51) aufweist, der parallel zu einer Seitenkante der Vorderfläche (51) verläuft.

32. Verpackung nach Anspruch 31, dadurch gekennzeichnet, daß der elastische Bereich nach einem der Ansprüche 24 bis 26 ausgebildet ist.

33. Verpackung nach einem der Ansprüche 27 bis 32, dadurch gekennzeichnet, daß die Vorderfläche (51) und die Seitenbereiche (52 bis 55) aus einem verrottbaren Material bestehen.

34. Verpackung nach Anspruch 33, dadurch gekennzeichnet, daß das Material ein Textilmaterial aus Baumwolle, Jute oder Leinen ist.

35. Verpackung nach einem der Ansprüche 29 bis 34, dadurch gekennzeichnet, daß die Gurtbänder (56) aus einem verrottbaren Material bestehen.

36. Verpackung nach einem der Ansprüche 1 bis 35, dadurch gekennzeichnet, daß an der Innenseite der Schutzhülle (1) ein stoßdämpfender Schutzbereich (70) vorgesehen ist, der im montierten Zustand der Schutzhülle (1) einen vor Stößen zu schützenden Bereich des Gegenstandes (4) überdeckt.

37. Verpackung nach einem der Ansprüche 1 bis 36, dadurch gekennzeichnet, daß die Schutzhülle (1) an die Form eines plattenförmigen Gegenstandes (4) angepaßt ist, derart, daß sie ein taschenförmiges Aufnahmeteil (72) für eine Seite des Gegenstandes (4) aufweist, daß das Aufnahmeteil (72) in den Ecken seines Bodenbereiches und/oder in den Ecken seiner Seitenbereiche Einlagen (3) nach einem der Ansprüche 8 bis 12 aufweist, daß eine Wand des Aufnahmeteiles (72) derart verlängert ist, daß sie über die andere Seite des Gegenstandes (4) geführt und an der anderen, gegenüberliegenden Wand des Aufnahmeteiles (72) befestigbar ist.

38. Verpackung nach Anspruch 37, dadurch gekennzeichnet, daß die verlängerte Wand im Bereich der anderen Seite des verpackten Gegenstandes (4) einen stoßdämpfenden Streifen (74) aufweist, der die Kantenbereiche der anderen Seite des Gegenstandes (4) umschließt.

39. Verpackung nach einem der Ansprüche 1 bis 38, dadurch gekennzeichnet, daß das eine Fußteile (80) aufweisende Bodenwand eines verpackten Gegenstandes (4) überdeckende Seitenteil (2") Ausnehmungen (81) für die Fußteile (80) aufweist.

40. Verpackung nach Anspruch 39, dadurch gekennzeichnet, daß die Ausnehmungen die Form von Schlitzen aufweisen, die in der Aufziehrichtung der Schutzhülle (1) von dem oberen Seitenteil (2) aus verlaufen.

41. Verpackung nach Anspruch 40, dadurch gekennzeichnet, daß sich die Schlitze an der dem oberen Seitenteil (2) abgewandten Seite des Seitenteiles (2") nach außen öffnen.

42. Verpackung nach einem der Ansprüche 1 bis 7, dadurch gekennzeichnet, daß die Eckelemente (8^{*}, 8'^{*}) mit nach außen vorstehenden wulstartigen Bereichen aus einteilig mit den entsprechenden Seitenwandteilen (11 bis 15^{*}) der Schutzhülle (1^{*}) gebildeten Bereichen und Befestigen zweier Bereiche zweier benachbarter Seitenwandteile (12^{*}, 13^{*}) hergestellt sind und daß die Bereiche eine größere Dicke aufweisen als der Rest der Seitenwandteile (11 bis 15^{*}).

43. Verpackung nach Anspruch 42, dadurch gekennzeichnet, daß die Bereiche durch Umfalten eines entsprechenden Randbereiches (2^{*}, 2'^{*}) eines Seitenwandteiles (11 bis 15^{*}) und Befestigen des umgefalteten Randbereiches (2^{*}, 2'^{*}) auf dem Seitenwandteil (11 bis 15^{*}) gebildet sind.

44. Verpackung nach Anspruch 43, dadurch gekennzeichnet, daß der Bereich durch Umfalten des Randbereiches (2^{*}) nach außen gebildet ist.

45. Verpackung nach Anspruch 43, dadurch gekennzeichnet, daß der Bereich durch Umfalten des Randbereiches (2'^{*}) nach innen gebildet ist.

46. Verpackung nach Anspruch 43, dadurch gekennzeichnet, daß der Bereich (22^{*}, 22'^{*}) dadurch gebildet ist, daß ein Ausgangsmaterial der vorgegebenen Dicke in allen Gebieten außerhalb des Bereiches (22^{*}, 22'*) auf eine kleinere Dicke verdichtet ist.

47. Verpackung nach Anspruch 46, dadurch gekennzeichnet, daß ein Ausgangsmaterial (20^{*}) auf das Format des Seitenwandteiles (11 bis 15^{*}) geschnitten und in dem Gebiet außerhalb des Bereiches (22^{*}) auf die kleinere Dicke verdichtet ist.

48. Verpackung nach Anspruch 46, dadurch gekennzeichnet, daß die Seitenwandteile (11 bis 15^{*}) durch Herausschneiden aus einem bahnförmigen Ausgangsmaterial (20'*) hergestellt sind, das in wenigstens einem Kantenbereich die vorgegebene Dicke aufweist und in dem anderen Gebiet auf die kleinere Dicke verdichtet ist.

49. Verpackung nach Anspruch 48, dadurch gekennzeichnet, daß das bahnförmige Material Bereiche (22'*) an sich gegenüberliegenden Kantenbereichen aufweist.

50. Verpackung nach einem der Ansprüche 42 bis 49, dadurch gekennzeichnet, daß die Eckelemente durch Aufeinanderlegen der Bereiche zweier benachbarter Seitenwandteile (12^{*}, 13^{*}) und Befestigen derselben aneinander durch eine Naht (3^{*}, 3'^{*}) gebildet sind, die die aufeinanderliegenden Bereiche an einer von den freien Enden derselben beabstandeten Stelle miteinander verbindet.

51. Verpackung nach Anspruch 50, dadurch gekennzeichnet, daß die Naht (3^{*}, 3'^{*}) eine mit einem Faden gebildete Naht oder eine durch thermisches Verschweißen oder Verkleben gebildete Naht ist.

52. Verpackung nach einem der Ansprüche 42 bis 50, dadurch gekennzeichnet, daß wenigstens Zwei sich gegenüberliegende Seitenwandteile (12^{*} bis 15^{*}) im Bereich der Öffnung (16^{*}) überstehende Lappenbereiche (5^{*}) aufweisen, die Kanäle (6^{*}) besitzen, durch die eine Zugeinrichtung (7^{*}) geführt ist, derart, daß die Lappenteile (5^{*}) beim Spannen der Zugeinrichtung (7^{*}) über die entsprechende Seite eines in der Schutzhülle (1^{*}) befindlichen Gegenstand (G^{*}) aufeinanderzugezogen werden.

53. Verpackung nach Anspruch 52, dadurch gekennzeichnet, daß sämtliche vier Seitenwandteile (12^{*} bis 15^{*}) Lappenteile (5^{*}) aufweisen.

54. Verpackung nach Anspruch 52 oder 53, dadurch gekennzeichnet, daß die Lappenteile (5^{*}) einstückig mit den Seitenwandteilen (11* bis 15^{*}) ausgebildet sind.

55. Verpackung nach Anspruch 52 oder 53, dadurch gekennzeichnet, daß die Lappenteile (5^{*}) getrennte Teile sind und daß zwischen den Lappenteilen (5^{*}) und den entsprechenden Seitenwandteilen (11* bis 15^{*}) ebenfalls Eckelemente angeordnet sind.

56. Verpackung nach einem der Ansprüche 42 bis 55, dadurch gekennzeichnet, daß sie aus einem Filz- oder Vliesmaterial besteht.

57. Verpackung nach Anspruch 56, dadurch gekennzeichnet, daß das Filz- oder Vliesmaterial aus Naturfasern, Kunststoffasern oder Mischfasern mit Natur- und Kunststoffasern besteht.

58. Verpackung nach einem der Ansprüche 42 bis 57, dadurch gekennzeichnet, daß entlang der durch zwei Seitenwandteile (12^{*}, 13^{*}) gebildeten Kante Eindrück- bzw. Einritzlinien (9^{*}) in den Seitenwandteilen gebildet sind, die ein Aufweiten der Seitenwandteile (12^{*}, 13^{*}) zur Bildung eines Eckwinkels von etwa 90 erleichtern.
